# EUROPEAN PATENT APPLICATION

(11) **EP 4 837 727 A2**
(43) Date of publication of application: **11.11.2026**
(21) Application number: 26207854.6
(22) Date of filing: 28.09.2026
(51) Int. Cl.: B29C 64/259, B29C 64/124, B33Y 30/00, B33Y 40/00

(54) **LOCKING APPARATUS AND PRINTING DEVICE**

(30) Priority: 31.12.2025 CN 202522844101 U
(71) Applicant: Shining 3D Tech Co., Ltd., Hangzhou, Zhejiang 311258 (CN)
(72) Inventor: Wu, Jun, Hangzhou, 311258 (CN); Wang, Mingbo, Hangzhou, 311258 (CN); Wu, Siyuan, Hangzhou, 311258 (CN); Qian, Huili, Hangzhou, 311258 (CN); Li, Pingao, Hangzhou, 311258 (CN)
(74) Representative: Metida

(57) **Abstract**

A locking apparatus (100) and a printing device are provided. The locking apparatus includes a base (200), a drive assembly (300), and a latch assembly (500). The drive assembly is disposed on the base. The latch assembly is rotatably connected to an outer surface of the base. The drive assembly drives the latch assembly to rotate, thereby pushing the latch assembly to open and close, so as to achieve a locked state or an unlocked state of a build platform. Thus, the locking apparatus uses the drive assembly to drive the latch assembly to rotate, thereby pushing the latch assembly to open and close, so as to achieve the locked state or the unlocked state of the build platform. Additionally, the build platform does not need to be provided with a magnetic component, thereby reducing the cost.

## Description

### FIELD

The subject matter herein generally relates to 3D printing technologies, and more particularly, to a locking apparatus and a printing device.

### BACKGROUND

With the popularization of digital dentistry, small-scale 3D printing devices have become core equipment for manufacturing dental restorations (such as single crowns, veneers, inlays, bridges, and the like). In such devices, standardized, miniaturized material storage tanks are used as consumables, and the material storage tanks are used to store high-viscosity printing materials such as ceramic resin.

In a 3D printing process, a build platform used in conjunction with the material storage tank needs to cooperate with a Z-axis drive system in the device to achieve precise extrusion of the resin material and vertical movement of the build platform. Due to the high viscosity and quick solidification characteristics of the ceramic resin material, a locking apparatus is required to provide a reliable fixed connection between the build platform and the material storage tank. At the same time, requirements such as quick unlocking and modular replacement need to be met to improve maintenance efficiency of the device and user operating experience.

In the small-scale 3D printing devices, a magnetic attraction method is generally used to lock the build platform. However, the build platform requires an additional magnetic component, which significantly increases the cost per unit. The strength of a magnetic attraction force is limited by a magnet size and a magnet material. Therefore, the magnetic attraction force cannot meet the higher locking force requirements of high-viscosity materials. Magnetic attraction locking may suffer from magnetic force attenuation due to magnetic field interference or long-term use, affecting locking reliability, and an unlocking process relies on manual operation, resulting in low efficiency.

### SUMMARY

A first aspect of the present application provides a locking apparatus including a base, a drive assembly disposed on the base, and a latch assembly rotatably connected to an outer surface of the base. The drive assembly is configured to drive the latch assembly to rotate, so that the latch assembly is enable to open or close during rotation, thereby locking or unlocking a build platform.

In some embodiments, the locking apparatus further includes a rotating member rotatably disposed on the base, and drivingly connected to the drive assembly, and an outer contour of the rotating member contacting one end of the latch assembly. The outer contour of the rotating member includes two first contours disposed opposite to each other and two second contours disposed opposite to each other, the two first contours are connected to the two second contours, and one of the two first contours and the two second contours protrude in a radial direction of the rotating member. Shapes of the two first contours and shapes of the two second contours cooperate with an opening and closing motion trajectory of the latch assembly, and a rotational movement of the rotating member is configured to drive the latch assembly to open and close.

In some embodiments, the locking apparatus cooperates with a positioning portion of the cantilever. The positioning portion is configured to axially cooperate with the build platform, and the latch assembly engages with the build platform when the latch assembly is closed, thereby locking the build platform to the locking apparatus.

In some embodiments, the base defines a clearance region, and when the locking apparatus is mounted on the positioning portion, the clearance region is configured to connect a vent hole on the positioning portion to communicate with an air supply unit on the cantilever.

In some embodiments, the latch assembly includes at least two hooks, the at least two hooks are uniformly distributed on the outer surface of the base along a circumferential direction, and each of the at least two hooks has a force bearing end and a locking end. When the force bearing end contacts the two first contours, the locking end is in a locked state. When the force bearing end contacts the two second contours, the locking end is in an unlocked state.

In some embodiments, an end of the build platform includes a protruding portion extending radially outward. When the locking apparatus is in a locked state, the locking end of the latch assembly engages with the protruding portion of the build platform to lock the build platform.

In some embodiments, the locking apparatus further includes an elastic member disposed between the base and the two hooks, and configured to provide an elastic force urging the force bearing end inward.

In some embodiments, the drive assembly includes a driving portion and a transmission assembly. One end of the transmission assembly is connected to the driving portion, and another end of the transmission assembly is connected to the rotating member. The transmission assembly includes a first transmission member and a second transmission member, the first transmission member and the second transmission member are rotatably connected to the driving portion, and the driving portion is configured to drive the first transmission member to rotate, thereby driving the second transmission member to rotate.

In some embodiments, the rotating member further defines a penetrating hole, and a third transmission member is disposed on a wall of the penetrating hole and extends in a circumferential direction. The third transmission member is drivingly connected to the second transmission member.

In some embodiments, the third transmission member is rotatably connected to the base via a bearing. The rotating member further includes a stepped portion, an inner end of the bearing cooperates with the stepped portion, and an outer end of the bearing cooperates with the base.

In some embodiments, the locking apparatus further includes an adapter, one end of the adapter extending through the penetrating hole of the rotating member and fixedly connected to the driving portion, and another end of the adapter fixedly connected to the base.

A second aspect of the present application provides a printing device including a cantilever and the locking apparatus. The locking apparatus is fixedly mounted on the cantilever, and the locking apparatus is configured to lock and fix a build platform onto the cantilever.

In some embodiments, the printing device further includes an air supply unit disposed in the cantilever. The cantilever includes a positioning portion at an end of the cantilever. The positioning portion defines a vent hole in communication with the air supply unit. When the locking apparatus locks and fixes the build platform onto the cantilever, the vent hole of the positioning portion connects to an air inlet interface of the build platform.

In some embodiments, the vent hole is provided with a packaging member on a wall of the vent hole, and the packaging member includes an aluminum foil and/or a heat-shrinkable film.

In some embodiments, the cantilever further includes a piercing member configured to pierce the packaging member.

### BRIEF DESCRIPTION OF THE DRAWINGS

In order to more clearly illustrate technical solutions in embodiments of the present application or in the prior art, drawings required for use in the description of the embodiments of the present application or the prior art will be briefly introduced below. Obviously, the drawings in the following description are only a part of the embodiments of the present application. These drawings and the written description are not intended to limit the scope of the concept of the present application in any way, but rather to illustrate the concept of the present application for those skilled in the art by referring to specific embodiments. For those of ordinary skill in the art, other drawings can be obtained based on these drawings without creative work.
FIG. 1 is a schematic structural diagram of a locking apparatus according to an embodiment of the present application in an open state.
FIG. 2 is a schematic structural diagram of the locking apparatus according to an embodiment of the present application in a closed state.
FIG. 3 is an exploded schematic diagram of the locking apparatus according to an embodiment of the present application.
FIG. 4 is a schematic cross-sectional diagram of the locking apparatus according to an embodiment of the present application.
FIG. 5 is an exploded schematic diagram of a printing device according to an embodiment of the present application.
FIG. 6 is a schematic cross-sectional diagram of the printing device according to an embodiment of the present application.
FIG. 7 is a partial structural schematic diagram of the printing device according to an embodiment of the present application.
FIG. 8 is a partial structural schematic diagram of a resin tank according to an embodiment of the present application.

### DESCRIPTION OF REFERENCE NUMERALS

100: locking apparatus; 200: base; 210: through hole; 220: third mounting groove; 300: drive assembly; 310: driving portion; 320: transmission assembly; 321: first transmission member; 322: second transmission member; 400: rotating member; 410: outer contour; 411: first contour; 412: second contour; 420: penetrating hole; 421: third transmission member; 430: bearing; 440: stepped portion; 500: latch assembly; 510: hook; 511: force bearing end; 512: locking end; 513: first mounting groove; 514: second mounting groove; 520: rotating shaft; 530: elastic member; 600: adapter; 610: first clamping jaw; 620: second clamping jaw; 630: connecting rod; 700: printing device; 710: cantilever; 711: positioning portion; 712: vent hole; 713: air supply unit; 714: clearance region; 720: resin tank; 730: build platform; 731: protruding portion; 740: cushion; 750: packaging member; 760: piercing member; 800: printing system.

### DETAILED DESCRIPTION

The technical solutions in the embodiments of the present application will be clearly and completely described below in conjunction with the accompanying drawings in the embodiments of the present application. Obviously, the described embodiments are only a part of the embodiments of the present application, rather than all of the embodiments. Based on the embodiments in the present application, all other embodiments obtained by those of ordinary skill in the art without creative work fall within the scope of protection of the present application.

As described in the Background section, in the small-scale 3D printing devices, a magnetic attraction method is generally used to lock the build platform. However, the build platform requires an additional magnetic component, which significantly increases the cost per unit. The strength of a magnetic attraction force is limited by a magnet size and a magnet material. Therefore, the magnetic attraction force cannot meet the higher locking force requirements of high-viscosity materials. Magnetic attraction locking may suffer from magnetic force attenuation due to magnetic field interference or long-term use, affecting locking reliability, and an unlocking process relies on manual operation, resulting in low efficiency.

In response to the above technical problems, a first aspect of the embodiments of the present application provides a locking apparatus. The locking apparatus includes a base, a drive assembly, and a latch assembly. The drive assembly is disposed on the base. The latch assembly is rotatably connected to an outer surface of the base. The drive assembly drives the latch assembly to rotate, so that the latch assembly is enable to open or close during rotation, thereby locking or unlocking the build platform. Thus, the locking apparatus provided by the embodiments of the present application uses the drive assembly to drive the latch assembly to rotate, thereby pushing the latch assembly to open and close, so as to achieve a locked state or an unlocked state of the build platform. Additionally, the build platform does not need to be provided with a magnetic component, thereby reducing the cost.

A second aspect of the embodiments of the present application provides a printing device. The printing device includes a cantilever and the above-mentioned locking apparatus. The locking apparatus is fixedly mounted on the cantilever. An air supply unit 713 is disposed in the cantilever. A positioning portion is provided at an end of the cantilever. A vent hole in communication with the air supply unit 713 is defined on the positioning portion. When the locking apparatus locks and fixes the build platform onto the cantilever, the vent hole of the positioning portion is connected to an air inlet interface of the build platform.

A third aspect of the embodiments of the present application provides a printing system. The printing system includes the mentioned printing device, a resin tank, and the build platform. The build platform is connected to the resin tank. The locking apparatus of the printing device is used to lock the build platform onto the cantilever.

In order to make the above-mentioned purposes, features, and advantages of the embodiments of the present application more obvious and understandable, the technical solutions in the embodiments of the present application will be clearly and completely described below in conjunction with the accompanying drawings in the embodiments of the present application. Obviously, the described embodiments are only a part of the embodiments of the present application, rather than all of the embodiments. Based on the embodiments in the present application, all other embodiments obtained by those of ordinary skill in the art without creative work fall within the scope of protection of the present application.

The embodiments of the present application provide a locking apparatus, a printing device, and a printing system. The drive assembly drives the latch assembly to rotate, thereby pushing the latch assembly to open and close, so as to achieve a locked state or an unlocked state of the build platform. Additionally, the build platform does not need to be provided with a magnetic component, thereby reducing the cost. The specific structures of the locking apparatus and the printing device provided by the embodiments of the present application are introduced below with reference to the accompanying drawings.

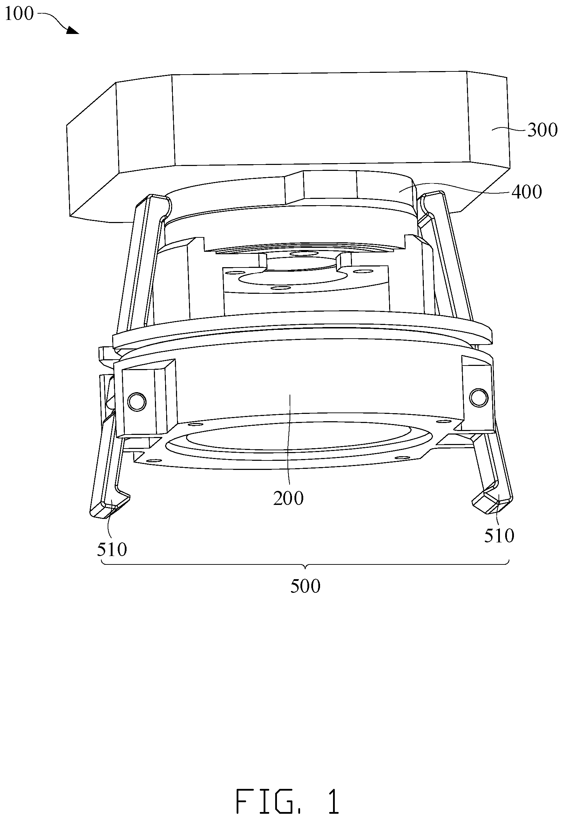

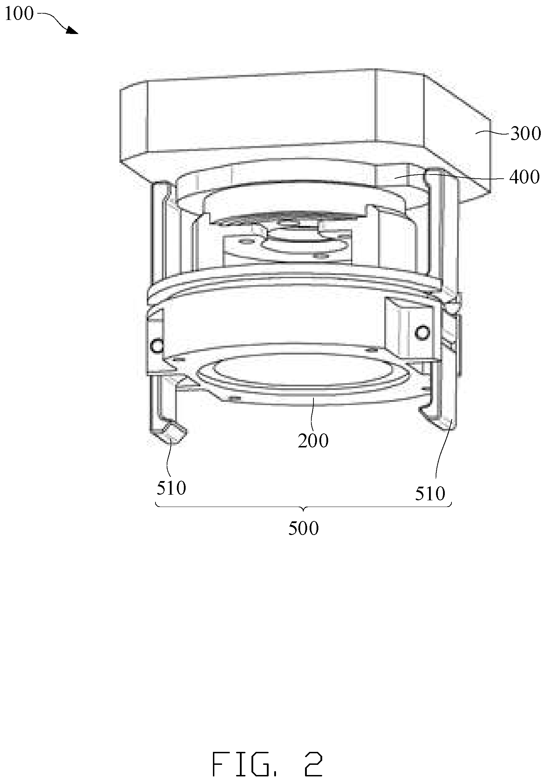

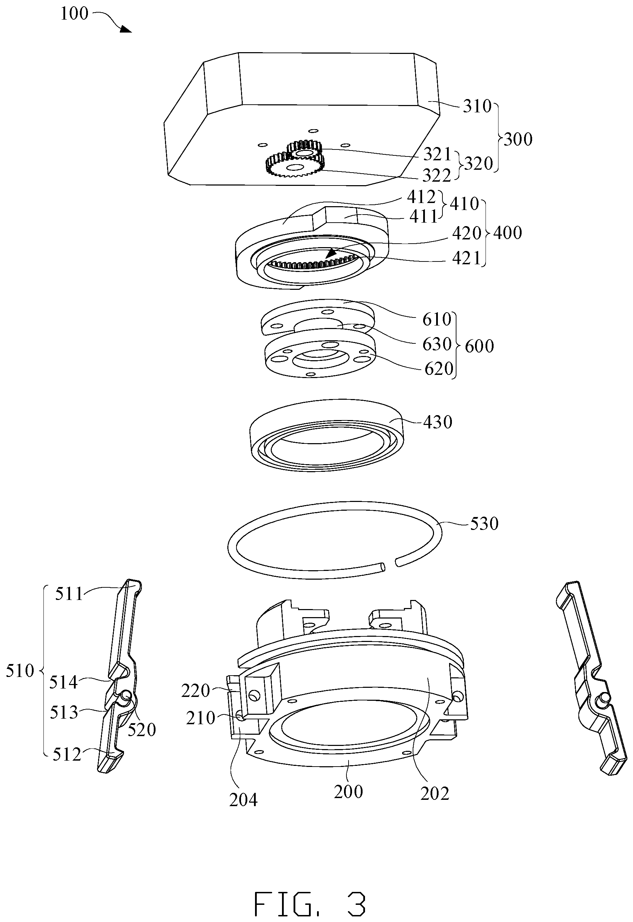

Referring to FIGS. 1 and 2, a locking apparatus 100 is provided according to a first aspect of the embodiments of the present application. The locking apparatus 100 may include a base 200, a drive assembly 300, a rotating member 400, and a latch assembly 500. In a possible implementation, the drive assembly 300 may be disposed on the base 200, and the rotating member 400 may be disposed between the drive assembly 300 and the base 200. The rotating member 400 may be drivingly connected to the drive assembly 300, and the rotating member 400 is rotatably disposed on the base 200. As shown in FIG. 3, the latch assembly 500 is rotatably connected to an outer surface of the base 200, and one end of the latch assembly 500 contacts an outer contour 410 of the rotating member 400.

It can be understood that the drive assembly 300 can drive the rotating member 400 to perform a rotational movement about an axis of the rotating member 400. During the rotation of the rotating member 400, the drive assembly 300 can drive the latch assembly 500 to rotate. The latch assembly 500 can open or close during the rotation, so that the latch assembly 500 is enable to open and close following the rotational movement of the outer contour 410 of the rotating member 400, thereby achieving locking or unlocking actions.

Thus, the locking apparatus 100 provided by the embodiments of the present application uses the drive assembly 300 to drive the rotating member 400 to rotate, thereby pushing the latch assembly 500 to open and close, so as to achieve a locked state or an unlocked state of the build platform 730. Additionally, the build platform 730 does not need to be provided with a magnetic component, thereby reducing the cost.

Referring to FIG. 3, based on the above embodiments, the outer contour 410 of the rotating member 400 may include a first contour 411 and a second contour 412. In a possible implementation, a number of the first contours 411 and a number of the second contours 412 may each be two, and the embodiments of the present application do not impose limitations here. In the embodiments of the present application, the two first contours 411 may be disposed opposite to each other, and correspondingly, the two second contours 412 may be disposed opposite to each other. The first contours 411 and the second contours 412 are connected to form the outer contour 410 of the rotating member 400.

Referring to FIG. 3, based on the above embodiments, the first contours 411 or the second contours 412 protrude in a radial direction of the rotating member 400. In a possible implementation, the first contours 411 may protrude in the radial direction of the rotating member 400. Alternatively, in another possible implementation, the second contours 412 may protrude in the radial direction of the rotating member 400. The embodiments of the present application do not impose limitations here.

In the embodiments of the present application, a case where the first contours 411 protrude in the radial direction of the rotating member 400 is taken as an example. It can be understood that when the rotating member 400 rotates to a position where the first contours 411 contact the latch assembly 500, the latch assembly 500 is in a closed state, thereby locking the build platform 730. Correspondingly, when the rotating member 400 rotates to a position where the second contours 412 contact the latch assembly 500, the latch assembly 500 is in an open state, thereby unlocking the build platform 730. Thus, shapes of the first contours 411 and shapes of the second contours 412 can cooperate with the opening and closing motion trajectory of the latch assembly 500, allowing the latch assembly 500 to open and close through the rotational movement of the rotating member 400.

In a possible implementation, by way of example, the rotating member 400 may be a cam structure, and the embodiments of the present application do not impose limitations here.

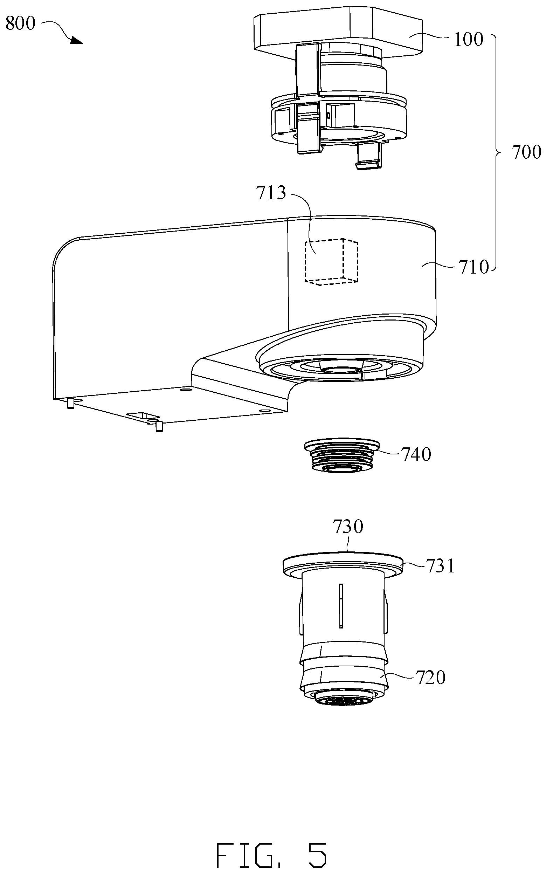

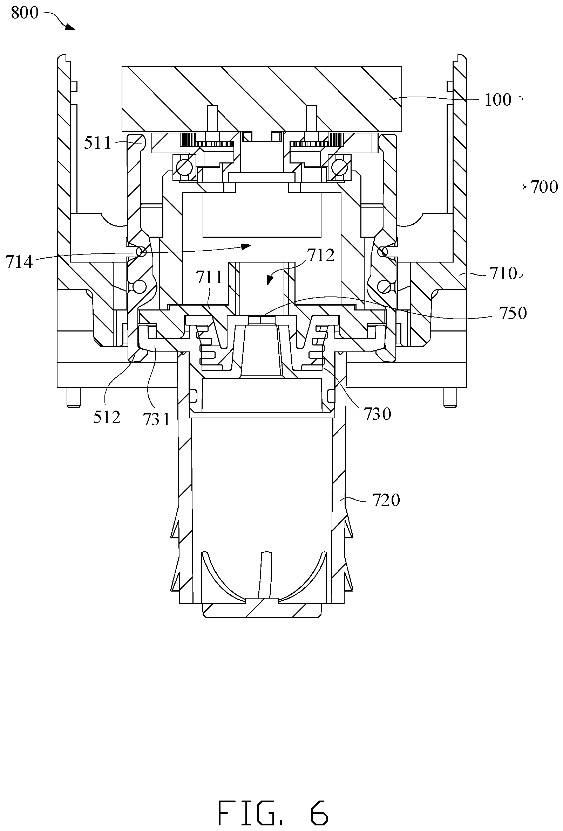

Referring to FIGS. 5 and 6, based on the above embodiments, the locking apparatus 100 is mounted on a cantilever 710. Specifically, the locking apparatus 100 can cooperate with a positioning portion 711 of the cantilever 710. The positioning portion 711 can achieve axial cooperation with the build platform 730, and the latch assembly 500 can engage with the build platform 730 when the latch assembly 500 closed, thereby achieving locking of the build platform 730.

In a possible implementation, a clearance region 714 may be defined on the base 200, an air supply unit 713 may be provided in the cantilever 710, and a vent hole 712 may be defined in the positioning portion 711. It can be understood that when the locking apparatus 100 is mounted on the positioning portion 711, the clearance region 714 connects the vent hole 712 on the positioning portion 711 to communicate with the air supply unit 713 on the cantilever 710.

Referring to FIGS. 1 and 2, based on the above embodiments, by way of example, the latch assembly 500 may include a male buckle or a female buckle. The latch assembly 500 may further include hooks 510. In a possible implementation, a number of hooks 510 may be at least two, and the embodiments of the present application do not impose limitations on the number of hooks 510. In the embodiments of the present application, two hooks 510 are used as an example. As shown in FIG. 3, the two hooks 510 are uniformly distributed on the outer surface of the base 200 along a circumferential direction. Each hook 510 may have a force bearing end 511 and a locking end 512. The force bearing end 511 is used to contact the outer contour 410 of the rotating member 400, and the locking end 512 is used to engage with the build platform 730.

In the embodiments of the present application, it can be understood that when the force bearing end 511 contacts the first contours 411, the locking end 512 is closed inward, being in a locked state. Additionally, when the force bearing end 511 contacts the second contours 412, the locking end 512 is opened outward, being in an unlocked state.

Referring to FIG. 3, based on the above embodiments, the base 200 includes a main body 202, and the main body 202 is substantially hollow cylindrical. The periphery of the main body 202 is symmetrically equipped with convex ridges 204. A through hole 210 may be defined in the convex ridges 204, and a first mounting groove 513 may be defined in the hook 510. The through hole 210 and the first mounting groove 513 may be disposed in alignment with each other. In a possible implementation, a rotating shaft 520 may be disposed to sequentially extend through the first mounting groove 513 and the through hole 210, and the hook 510 may rotate about the rotating shaft 520, thereby enabling the hook 510 to be rotatably connected to the base 200 via the rotating shaft 520.

Referring to FIG. 3, based on the above embodiments, the locking apparatus 100 may further include an elastic member 530. The elastic member 530 may be disposed between the base 200 and the hook 510. In the embodiments of the present application, it can be understood that the elastic member 530 can provide an elastic force urging the force bearing end 511 inward, thereby causing the locking end 512 to tend toward the open state.

Referring to FIG. 3, based on the above embodiments, in a possible implementation, a second mounting groove 514 may further be defined in the hook 510, and a third mounting groove 220 may be defined in the periphery of the main body 202 of the base 200. It can be understood that the second mounting groove 514 and the third mounting groove 220 are disposed in alignment with each other. In the embodiments of the present application, the elastic member 530 may be disposed in the third mounting groove 220 of the base 200 and cooperate with the second mounting groove 514 on the hook 510, thereby fixedly connecting the elastic member 530 between the base 200 and the hook 510.

In a possible implementation, the elastic member 530 may be one of an elastic band, a spring, or a rubber member, and the embodiments of the present application do not impose limitations here. In the embodiments of the present application, the elastic member 530 is a circular elastic ring with an opening.

When the elastic member 530 is a spring, the spring may be disposed in the third mounting groove 220 of the base 200. Two ends of the spring respectively abut against a bottom wall of the third mounting groove 220 and a wall surface corresponding to the second mounting groove 514 of the hook 510, thereby providing an elastic preload force perpendicular to the base 200 to the hook 510.

When the elastic member 530 is an elastic band, at least a portion of the elastic band may be disposed in the second mounting groove 514 of the hook 510, and the elastic band is pressed against a wall surface of the second mounting groove 514 by virtue of a radial elastic tension of the elastic band, thereby providing a radial tightening force to the hook 510.

Referring to FIG. 3, based on the above embodiments, the drive assembly 300 may include a driving portion 310 and a transmission assembly 320. One end of the transmission assembly 320 may be connected to the driving portion 310, and another end of the transmission assembly 320 may be connected to the rotating member 400, so that the driving portion 310 is connected to the rotating member 400 through the transmission assembly 320. In a possible implementation, the driving portion 310 may be a motor, and the embodiments of the present application do not impose limitations here.

Referring to FIG. 3, based on the above embodiments, in a possible implementation, the transmission assembly 320 may further include a first transmission member 321 and a second transmission member 322. The first transmission member 321 and the second transmission member 322 are rotatably connected to the driving portion 310. In the embodiments of the present application, it can be understood that the driving portion 310 can drive the first transmission member 321 to rotate, thereby driving the second transmission member 322 to rotate through the first transmission member 321.

Referring to FIG. 3, based on the above embodiments, a penetrating hole 420 may also be defined in the rotating member 400. A third transmission member 421 may be provided on a wall of the penetrating hole 420. In a possible implementation, the third transmission member 421 may be disposed circumferentially along the wall of the penetrating hole 420. In the embodiments of the present application, the third transmission member 421 can be drivingly connected to the second transmission member 322. It can be understood that after the driving portion 310 drives the first transmission member 321 to rotate, the second transmission member 322 is driven to rotate, and then the entire rotating member 400 is driven to rotate through the third transmission member 421.

In a possible implementation, the first transmission member 321, the second transmission member 322, and the third transmission member 421 may each be a gear structure, and the embodiments of the present application do not impose limitations here. In the embodiments of the present application, the first transmission member 321 may be meshingly connected to the second transmission member 322, and the second transmission member 322 may also be meshingly connected to the third transmission member 421.

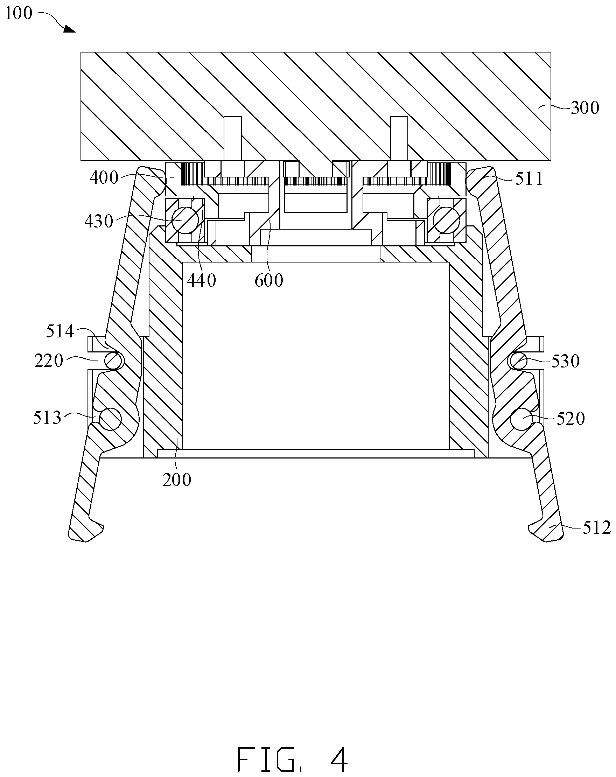

Referring to FIG. 3, based on the above embodiments, in a possible implementation, the third transmission member 421 may be rotatably connected to the base 200 via a bearing 430. In the embodiments of the present application, as shown in FIG. 4, a stepped portion 440 may be provided on the rotating member 400. It can be understood that an inner end of the bearing 430 can cooperate with the stepped portion 440, and an outer end of the bearing 430 can cooperate with the base 200, thereby allowing the bearing 430 to be disposed between the rotating member 400 and the base 200, facilitating the rotation of the rotating member 400.

Referring to FIG. 3, based on the above embodiments, the locking apparatus 100 may further include at least one adapter 600. In a possible implementation, a number of adapters 600 may be one or more, and the embodiments of the present application do not impose limitations here. In the embodiments of the present application, the adapter 600 includes a first clamping jaw 610, a second clamping jaw 620, and a connecting rod 630. The first clamping jaw 610 and the second clamping jaw 620 are disposed at two ends of the connecting rod 630. The first clamping jaw 610 may be extended through the penetrating hole 420 of the rotating member 400 and fixedly connected to the driving portion 310. Additionally, the second clamping jaw 620 may be fixedly connected to the base 200. The rotating member 400 is sleeved on the connecting rod 620.

Referring to FIGS. 5 and 6, a printing device 700 is provided according to a second aspect of the embodiments of the present application. The printing device 700 may include a cantilever 710 and the locking apparatus 100. In the embodiments of the present application, it can be understood that the locking apparatus 100 can be used to achieve a locked state or an unlocked state of the build platform 730.

Referring to FIG. 6, based on the above embodiments, the locking apparatus 100 may be fixedly mounted on the cantilever 710. The air supply unit 713 is disposed in the cantilever 710. A positioning portion 711 is provided at an end of the cantilever 710. A vent hole 712 in communication with the air supply unit 713 is disposed on the positioning portion 711.

In the embodiments of the present application, it can be understood that the locking apparatus 100 can be used to lock and fix the build platform 730 onto the cantilever 710, and to ensure reliable connection between the air supply unit 713 on the cantilever 710 and the vent hole 712 on the positioning portion 711.

In the embodiments of the present application, it can be understood that the cantilever 710 moves up and down, and by fixing the build platform 730 with the locking apparatus 100, the cantilever 710 drives the build platform 730 to move up and down synchronously.

The locking apparatus 100 is disposed in the cantilever 710. The base 200 is mounted on the positioning portion 711, and the hook 510 extends beyond the positioning portion 711, cooperating with the positioning portion 711 to form a locking groove for positioning the build platform 730. An end of the build platform 730 includes a protruding portion 731. In a possible implementation, the end of the build platform 730 facing the locking apparatus 100 includes a protruding portion 731, and the protruding portion 731 protrudes outward in a transverse direction of the build platform 730, and the protruding portion 731 is positioned in the locking groove. Of course, a locking groove may also be provided on the build platform 730, and the hook 510 is positioned in the locking groove.

In the printing device 700, in order to supply gas to the build platform 730, an integrated air supply unit 713 is provided. Specifically, the air supply unit 713 is disposed in the cantilever 710. A gas output path of the air supply unit 713 is guided to the positioning portion 711 at the end of the cantilever 710.

The vent hole 712 serves as a gas output port. The vent hole 712 is in communication with the air supply unit 713, thereby forming a complete, closed gas delivery path from a gas source to an interface. In one embodiment, a ventilation connector is provided on the positioning portion 711, the vent hole 712 is provided in the ventilation connector, and the ventilation connector cooperates with the air inlet interface.

When the locking apparatus 100 securely locks the build platform 730 onto the cantilever 710, the locking apparatus 100 also ensures that the corresponding air inlet interface on the build platform 730 and the vent hole 712 on the positioning portion 711 of the cantilever 710 are precisely aligned and reliably sealed against each other. This allows gas from the air supply unit 713 to be delivered through the vent hole 712 to the build platform 730, and then to a printing cavity formed by the cooperation of the build platform 730 and the resin tank 720, so as to complete specific printing process steps.

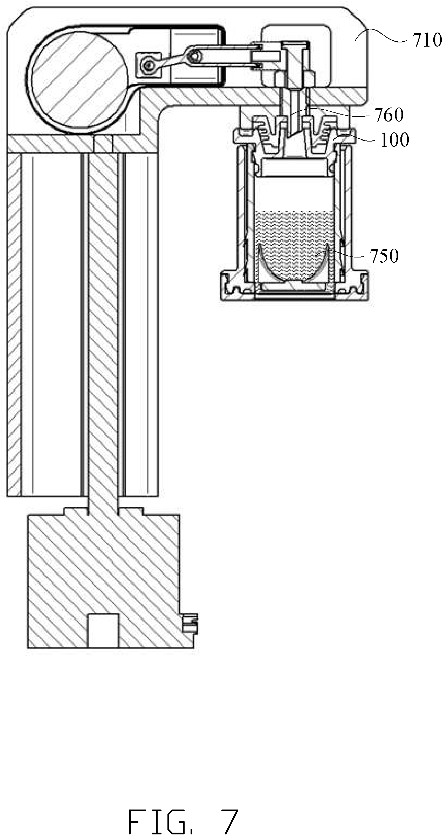

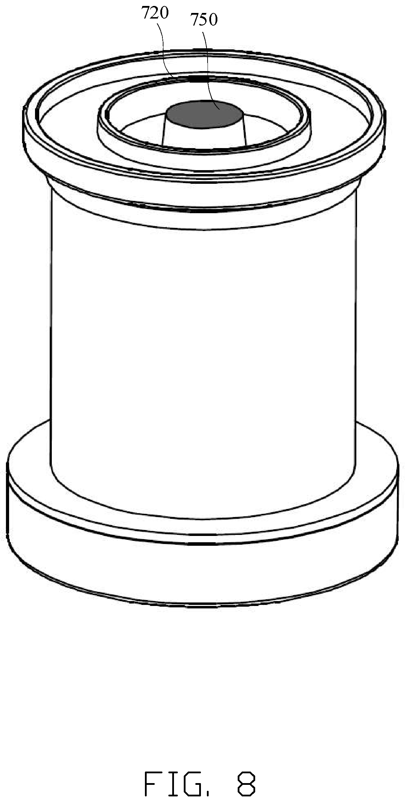

Referring to FIGS. 7 and 8, the vent hole 712 is provided with a packaging member 750 on a wall of the vent hole 712 such as an aluminum foil and/or a heat-shrinkable film. The cantilever 710 moves toward a molding platform so that a piercing member 760 on the cantilever 710 pierces the packaging member 750, and then the ventilation connector is inserted into and communicates with the vent hole 712. In the embodiment, the cantilever 710 is fixedly connected to or abuts against the molding platform, and the cantilever 710 moves synchronously with the molding platform. Of course, the ventilation connector may also be separately inserted into and communicate with the vent hole 712 without depending on a cooperation state between the cantilever 710 and the molding platform. In the embodiment, controlling the cantilever 710 to move toward a molding module specifically includes controlling the cantilever 710 to move toward the molding module so that the piercing member 760 on the cantilever 710 pierces the packaging member 750 of the molding platform; includes controlling the cantilever to move toward the molding module so that an inflation connector on the cantilever is inserted into and communicates with a vent hole of the molding platform; includes controlling the cantilever 710 to move toward the molding module so that the cantilever 710 abuts against the molding platform; and further includes controlling the cantilever 710 to move toward the molding module so that the cantilever 710 abuts against the molding platform and the molding platform abuts against a light-transmitting assembly (the light-transmitting assembly supports and is tensioned on the printing device 700). In a state where the cantilever 710 abuts against the molding platform, a clamp on the cantilever 710 is controlled to clamp the molding platform to form a fixed connection, and in a state where the molding platform abuts against the light-transmitting assembly, zero position detection is performed.

Referring to FIGS. 5 and 6, a printing system 800 is provided according to a third aspect of the embodiments of the present application. The printing system 800 may include the printing device 700, a resin tank 720, and a build platform 730. The build platform 730 and the resin tank 720 are connected to each other. The locking apparatus 100 of the printing device 700 is used to lock or unlock the build platform 730. In a possible implementation, one end of the build platform 730 is connected to the resin tank 720, and another end of the build platform 730 cooperates with the positioning portion 711 of the cantilever 710.

It can be understood that the build platform 730 may be integrated into the resin tank 720 as a part of the resin tank 720. The embodiments of the present application do not impose limitations here.

Referring to FIG. 6, based on the above embodiments, the end of the build platform 730 includes a protruding portion 731. In a possible implementation, the end of the build platform 730 facing the locking apparatus 100 includes a protruding portion 731, and the protruding portion 731 protrudes outward in a transverse direction of the build platform 730. Specifically, the protruding portion 731 protrudes outward in a radial direction of the build platform 730. By way of example, the protruding portion 731 may be a flange rim, and the embodiments of the present application do not impose limitations here.

Thus, in the embodiments of the present application, when the locking apparatus 100 is in a locked state, the locking end 512 of the latch assembly 500 of the locking apparatus 100 can engage with the protruding portion 731 of the build platform 730, thereby locking onto the build platform 730. Correspondingly, when the locking apparatus 100 is in an unlocked state, the locking end 512 of the latch assembly 500 of the locking apparatus 100 can disengage from the protruding portion 731 of the build platform 730, thereby unlocking from the build platform 730.

Referring to FIG. 5, based on the above embodiments, the printing device 700 may further include a cushion 740. The cushion 740 may be sleeved on the cantilever 710. It can be understood that the cushion 740 can provide an airtight seal and also provide elasticity when the latch assembly 500 clamps. In a possible implementation, the cushion 740 may be a rubber member, and the embodiments of the present application do not impose limitations here.

The build platform 730 contacts the cantilever 710. The driving portion 310 in the locking apparatus 100 starts to rotate, sequentially driving the first transmission member 321, the second transmission member 322, the third transmission member 421, and the rotating member 400 to perform rotational movement. The first contours 411 of the rotating member 400 gradually contact the force bearing ends 511 of the hooks 510, causing the locking ends 512 of the hooks 510 to tighten inward, thereby engaging with the protruding portion 731 of the build platform 730 to lock the build platform 730.

The driving portion 310 in the locking apparatus 100 continues to rotate, sequentially driving the first transmission member 321, the second transmission member 322, the third transmission member 421, and the rotating member 400 to perform rotational movement. The second contours 412 of the rotating member 400 gradually contacts the force bearing ends 511 of the hooks 510, and under an action of the elastic member 530, the force bearing ends 511 are caused to close inward, thereby causing the locking ends 512 to be in an open state, thus unlocking the build platform 730.

In the embodiments of the present application, the build platform 730 can be connected to the resin tank 720. A printing process of the printing device 700 is as follows: the build platform 730 moves upward from a bottom of the resin tank 720, and the build platform 730 performs a reciprocating movement throughout the printing process. A thin layer of liquid resin is formed between the build platform 730 and the resin tank 720. Then, a light source is transmitted through the resin tank 720 to irradiate the liquid resin according to sliced images. Resin in an irradiated area is solidified and firmly adheres to the build platform 730 or a previously solidified layer, achieving exposure curing. Subsequently, the build platform 730 moves upward to separate a newly solidified layer from the bottom of the resin tank 720. After the build platform 730 is lifted, the liquid resin flows again and then continues to spread into a uniform thin layer. Finally, the above steps are repeated until an entire object is printed.

In a possible implementation, the resin tank 720 is a resin tank 720 containing resin. Of course, the resin tank 720 may also be a resin tank 720 not containing resin, and the embodiments of the present application do not impose limitations here.

In the embodiments of the present application, the locking apparatus 100 provided by the embodiments of the present application uses the drive assembly 300 to drive the latch assembly 500 to rotate, thereby pushing the latch assembly 500 to open and close, so as to achieve a locked state or an unlocked state of the build platform 730. Additionally, the build platform 730 does not need to be provided with a magnetic component, thereby reducing the cost.

The embodiments or implementations in this specification are described in a progressive manner, with each embodiment focusing on differences from other embodiments. The same or similar parts between the various embodiments can be referred to each other.

It should be noted that phrases such as "during specific implementation", "in some embodiments", "in this embodiment", "exemplarily", and the like mentioned in the specification indicate that a described embodiment may include a particular feature, structure, or characteristic, but not every embodiment necessarily includes that particular feature, structure, or characteristic. Moreover, such phrases do not necessarily refer to a same embodiment. Furthermore, when a particular feature, structure, or characteristic is described in connection with an embodiment, implementing such feature, structure, or characteristic in conjunction with other embodiments, whether explicitly described or not, is within the knowledge of those skilled in the art.

Generally, terms should be understood, at least in part, from a usage in a context. For example, the term "one or more" as used herein may be used to describe any feature, structure, or characteristic in a singular sense, or may be used to describe a combination of features, structures, or characteristics in a plural sense, depending at least in part on the context. Similarly, terms such as "a" or "the" may be understood to convey singular usage or plural usage, depending at least in part on the context.

It should be readily understood that "on", "above", and "over" in this disclosure should be interpreted in a broadest manner, such that "on" means not only "directly on" something but also includes a meaning of being "on" something with an intermediate feature or layer therebetween, and "above" or "over" means not only being "above" or "over" something but can also include a meaning of being "above" or "over" something with no intermediate feature or layer therebetween (i.e., directly on something).

Additionally, spatially relative terms, such as "below", "beneath", "under", "above", "over", and the like, may be used herein for ease of description to describe a relationship of one element or feature to another element or feature as illustrated in the figures. The spatially relative terms are intended to encompass different orientations of a device in use or operation in addition to an orientation depicted in the figures. The device may be otherwise oriented (rotated 90 degrees or at other orientations), and the spatially relative descriptors used herein should be interpreted accordingly.

Furthermore, ordinal numbers such as "first", "second", etc., are used herein to describe different components or steps. The use of these ordinal numbers is for identification purposes only and should not be construed as implying any particular order, importance, or numerical limitation. For example, "first transmission member" and "second transmission member" are merely used to distinguish two different limiting components and do not imply any necessary order or priority in terms of structure, function, or mounting sequence.

Finally, it should be noted that those skilled in the art will readily contemplate other implementations of the present application after considering the specification and practicing the application disclosed herein. The present application is intended to cover any variations, uses, or adaptive changes of the present application that follow general principles of the present application and include common general knowledge or customary technical means in the technical field not disclosed by the present application. The description and examples are to be regarded as exemplary only, with a true scope and spirit of the present application being indicated by the following claims. The present application is not limited to the precise structures described above and illustrated in the accompanying drawings, and various modifications and changes may be made without departing from the scope thereof. The scope of the present application is to be limited only by the appended claims.

## Claims

1. A locking apparatus (100) configured to mount on a cantilever (710), the locking apparatus (100) comprising:
a base (200);
a drive assembly (300) disposed on the base (200); and
a latch assembly (500) rotatably connected to an outer surface of the base (200);
wherein the drive assembly (300) is configured to drive the latch assembly (500) to rotate, so that the latch assembly (500) is enable to open or close during rotation, thereby locking or unlocking a build platform (730).

2. The locking apparatus (100) of claim 1, further comprising a rotating member (400) rotatably disposed on the base (200), and drivingly connected to the drive assembly (300), and an outer contour (410) of the rotating member (400) contacting one end of the latch assembly (500);
wherein the outer contour (410) of the rotating member (400) comprises two first contours (411) disposed opposite to each other and two second contours (412) disposed opposite to each other, the two first contours (411) are connected to the two second contours (412), and one of the two first contours (411) and the two second contours (412) protrude in a radial direction of the rotating member (400);
shapes of the two first contours (411) and shapes of the two second contours (412) cooperate with an opening and closing motion trajectory of the latch assembly (500), and a rotational movement of the rotating member (400) is configured to drive the latch assembly (500) to open and close.

3. The locking apparatus (100) of claim 1, wherein the locking apparatus (100) cooperates with a positioning portion (711) of the cantilever (710), the positioning portion (711) is configured to axially cooperate with the build platform (730), and the latch assembly (500) engages with the build platform (730) when the latch assembly (500) is closed, thereby locking the build platform (730) to the locking apparatus (100).

4. The locking apparatus (100) of claim 3, wherein the base (200) defines a clearance region (714), and when the locking apparatus (100) is mounted on the positioning portion (711), the clearance region (714) is configured to connect a vent hole (712) on the positioning portion (711) to communicate with an air supply unit (713) on the cantilever (710).

5. The locking apparatus (100) of claim 2, wherein the latch assembly (500) comprises at least two hooks (510), the at least two hooks (510) are uniformly distributed on the outer surface of the base (200) along a circumferential direction, and each of the at least two hooks (510) has a force bearing end (511) and a locking end (512);
wherein when the force bearing end (511) contacts the two first contours (411), the locking end (512) is in a locked state; and
wherein when the force bearing end (511) contacts the two second contours (412), the locking end (512) is in an unlocked state.

6. The locking apparatus (100) of claim 5, wherein an end of the build platform (730) comprises a protruding portion (731) extending radially outward; and
when the locking apparatus (100) is in a locked state, the locking end (512) of the latch assembly (500) engages with the protruding portion (731) of the build platform (730) to lock the build platform (730).

7. The locking apparatus (100) of claim 6, further comprising an elastic member (530) disposed between the base (200) and the at least two hooks (510), and configured to provide an elastic force urging the force bearing end (511) inward.

8. The locking apparatus (100) of any one of claims 2 to 7, wherein the drive assembly (300) comprises a driving portion (310) and a transmission assembly (320);
one end of the transmission assembly (320) is connected to the driving portion (310), and another end of the transmission assembly (320) is connected to the rotating member (400);
the transmission assembly (320) comprises a first transmission member (321) and a second transmission member (322), the first transmission member (321) and the second transmission member (322) are rotatably connected to the driving portion (310), and the driving portion (310) is configured to drive the first transmission member (321) to rotate, thereby driving the second transmission member (322) to rotate.

9. The locking apparatus (100) of claim 8, wherein the rotating member (400) further defines a penetrating hole (420), and a third transmission member (421) is disposed on a wall of the penetrating hole (420) and extends in a circumferential direction; and
the third transmission member (421) is drivingly connected to the second transmission member (322).

10. The locking apparatus (100) of claim 9, wherein the third transmission member (421) is rotatably connected to the base (200) via a bearing (430); and
the rotating member (400) further comprises a stepped portion (440), an inner end of the bearing (430) cooperates with the stepped portion (440), and an outer end of the bearing (430) cooperates with the base (200).

11. The locking apparatus (100) of claim 10, further comprising an adapter (600), one end of the adapter (600) extending through the penetrating hole (420) of the rotating member (400) and fixedly connected to the driving portion (310), and another end of the adapter (600) fixedly connected to the base (200).

12. A printing device (700), comprising:
a cantilever (710); and
a locking apparatus (100) according to any one of claims 1 to 11;
wherein the drive assembly (300) is configured to drive the latch assembly (500) to rotate, so that the latch assembly (500) is enable to open or close during rotation, thereby locking or unlocking a build platform (730);
wherein the locking apparatus (100) is fixedly mounted on the cantilever (710), and the locking apparatus (100) is configured to lock and fix a build platform (730) onto the cantilever (710).

13. The printing device (700) of claim 12, further comprising an air supply unit (713) disposed in the cantilever (710), wherein the cantilever (710) comprises a positioning portion (711) at an end of the cantilever (710), the positioning portion (711) defines a vent hole (712) in communication with the air supply unit (713); and
when the locking apparatus (100) locks and fixes the build platform (730) onto the cantilever (710), the vent hole (712) of the positioning portion (711) connects to an air inlet interface of the build platform (730).

14. The printing device (700) of claim 13, wherein the vent hole (712) is provided with a packaging member (750) on a wall of the vent hole (712), and the packaging member (750) comprises an aluminum foil and/or a heat-shrinkable film.

15. The printing device (700) of claim 14, wherein the cantilever (710) further comprises a piercing member (760) configured to pierce the packaging member (750).
